(19)

Europäisches
Patentamt
European
Patent Office
Office européen
des brevets

(11) **EP 1 832 634 B1**

(12) **EUROPEAN PATENT SPECIFICATION**

(45) Date of publication and mention
of the grant of the patent:
**03.03.2010 Bulletin 2010/09**

(51) Int Cl.:
***C09D 11/00*** *(2006.01)*

(21) Application number: **07004674.3**

(22) Date of filing: **07.03.2007**

(54) **Water-based ink for inkjet printing**

Tinte auf Wasserbasis für Tintenstrahldruck

Encre à base d'eau pour impression à jet d'encre

(84) Designated Contracting States:
**DE GB**

(30) Priority: **08.03.2006 JP 2006062454**

(43) Date of publication of application:
**12.09.2007 Bulletin 2007/37**

(73) Proprietor: **Kao Corporation
Chuo-ku
Tokyo (JP)**

(72) Inventors:
• **Hiraishi, Atsushi
Wakayama-shi
Wakayama (JP)**
• **Tsutsumi, Takehiro
Wakayama-shi
Wakayama (JP)**

(74) Representative: **HOFFMANN EITLE
Patent- und Rechtsanwälte
Arabellastrasse 4
81925 München (DE)**

(56) References cited:
**EP-A- 1 247 847        EP-A1- 0 823 464
EP-A1- 1 022 151        WO-A-2006/127233
US-A1- 2005 228 069**

• **DATABASE WPI Week 200440 Derwent
Publications Ltd., London, GB; AN 2004-423087
XP002434121 & JP 2004 091590 A (DAINIPPON
INK CHEM INC) 25 March 2004 (2004-03-25)**
• **DATABASE WPI Week 200420 Derwent
Publications Ltd., London, GB; AN 2004-206133
XP002434122 & JP 2003 268278 A (RICOH KK) 25
September 2003 (2003-09-25)**

**Description**

BACKGROUND OF THE INVENTION

1. Field of the Invention

The present invention relates to water dispersions and water-based inks for inkjet printing, which are capable of decreasing bronze phenomenon of printed images, and also relates to a production method thereof.

2. Description of the Prior Art

In inkjet printings, droplets of ink are directly projected onto a recording medium from very fine nozzles and allowed to adhere to the recording medium, to form printed images. The inkjet printings have been rapidly spread because of their various advantages such as easiness of full colorization, low costs, capability of using ordinary paper as the recording medium, non-contact with printed images, etc.
Among the printing methods, in view of enhancing the weatherability and the water resistance of printed images, an inkjet printing method utilizing a pigment-based ink has now come to dominate. However, when a pigment is used as the colorant for inks, the reflected light from printed images has, in some cases, a color tone different from the inherent color of the pigment (bronze phenomenon) according to the observation angles. Particularly, phthalocyanine pigments contained in cyan inks produce reflected lights with a reddish tone to significantly impair the image quality. The bronze phenomenon is described in detail in Color Science Handbook, University of Tokyo Press, p 777.
To avoid the bronze phenomenon, proposed are an ink composition containing at least a polyether-modified polysiloxane and an emulsion of a sulfone group-containing (co)polymer (JP 2003-306620A), and a ink containing a polycyclic aromatic hetero-conjugated compound (JP 2004-67903A).
JP 2004-91590A discloses a water-based pigment dispersion containing a pigment, a water-soluble organic solvent, a copolymer resin obtained from 50 to 90% by weight of a styrene monomer and an acid group-containing monomer, and inorganic oxide fine particles in an amount of 0.01 to 10% by weight on the basis of the weight of the pigment, which is intended to satisfy both a storage stability, in particular, a long-term storage stability, and a water resistance of printed images at the same time.
JP 9-227812A discloses a water-based inkjet printing solution containing a pigment and colloidal silica which is reported to be capable of producing high-quality clear printed images with a sufficient water resistance and light resistance.
JP 11-12516A discloses an ink-jet printing ink composition containing a pigment, an inorganic oxide colloid, an alkali metal hydroxide and an aqueous solvent, which is intended to achieve an excellent ejection stability of the ink composition from a printing head and obtain printed images with a good rubbing resistance.
However, the proposed inks may adversely affect the quality of printed images upon the change in the additives and pigments.

SUMMARY OF THE INVENTION

The present invention relates to a water dispersion and water-based ink for inkjet printing which are capable of decreasing the bronze phenomenon, and further relates to a production method of the water dispersion.
The inventors have found that the bronze phenomenon can be effectively reduced by the use of silica particles and the problems mentioned above can be solved by this finding.
Thus, the present invention relates to:

(1) a water dispersion for inkjet printing as claimed including water-insoluble polymer particles, wherein the water-insoluble polymer particles contain silica particles and a pigment other than silica particles;
(2) a water dispersion for inkjet printing as claimed which is produced by subjecting a mixture of silica particles, a pigment other than the silica particles, a water-insoluble polymer, an organic solvent, and water to a dispersion treatment, and then, removing the organic solvent;
(3) a water-based ink for inkjet printing as claimed containing the water dispersion for inkjet printing 1 or 2 described above; and
(4) a method of producing a water dispersion for inkjet printing, as claimed which includes:

step 1 of subjecting a mixture of silica particles, a pigment other than silica particles, a water-insoluble polymer, an organic solvent, and water to a dispersion treatment, to obtain a dispersion; and
step 2 of removing the organic solvent from the dispersion obtained in the step 1.

DETAILED DESCRIPTION OF THE INVENTION

The present invention will be described in detail.

Pigment other than silica particles (also simply referred to as "pigment")

The water dispersion for inkjet printing of the present invention includes a pigment other than silica particles, preferably an organic pigment in view of reducing the bronze phenomenon.
Examples of the organic pigment include azo pigments, disazo pigments, phthalocyanine pigments, quinacridone pigments, isoindolinone pigments, dioxazine pigments, perylene pigments, perinone pigments, thioindigo pigments, anthraquinone pigments, and quinophthalone pigments, with at least one code-numbered pigment selected from the group consisting of C.I. Pigment Yellow, C.I. Pigment Red, C.I. Pigment Violet, C.I. Pigment Blue, and C.I. Pigment Green being preferred.

Of the organic pigments, preferred are cyan pigments and more preferred are phthalocyanine pigments because of their large effect of reducing the bronze phenomenon. Examples of the phthalocyanine pigment include metal-free phthalocyanine pigments and metal phthalocyanine pigment containing a metal such as copper, aluminum, nickel, cobalt, iron, titanium and tin, which may be non-substituted or halogenated with a halogen such as chlorine and bromine, with copper phthalocyanine pigments being preferred and at least one pigment selected from C.I. Pigment Blues 15, 15:1, 15:2, 15:3, 15:4, 16, and 60 being more preferred. Particularly preferred are C.L Pigment Blues 15:3 and 15:4 in view of their fastness to light, heat and solvents.

The bronze phenomenon of cyan pigments can be largely reduced by regulating the intensity ratio, intensity at 630 nm/intensity at 550 nm, in the reflection spectra of a halogen lamp C-ray from printed images (also referred to as "reflection spectrum intensity ratio") within a range of 4 or less. The reflection spectrum intensity ratio is measured by the method describe below. It has been known that the bronze phenomenon is associated with human vision. Of the color matching functions indicating the spectral sensitivity of human eye, the peak of the color matching function highly sensitive to red wave is present in the range of about 600 to 650 nm, and the peak of the color matching function highly sensitive to green wave is present at around 550 nm. Therefore, the reflected light comes to look red for human eye as the above ratio of both the color matching functions in the reflection spectra increases. In view of reducing the bronze phenomenon, the reflection spectrum intensity ratio is regulated within a range of preferably 4 or less, more preferably from 1 to 4, still more preferably from 1 to 3.5, and most preferably from 1 to 3.

In view of the dispersibility, optical density of printed images and rubbing resistance, the average primary particle size of the pigment is preferably from 10 to 100 nm, more preferably from 20 to 90 nm, and still more preferably from 30 to 80 nm. The average primary particle size is measured by the method described below.

Silica particles

The water dispersion for inkjet printing of the present invention is produced by subjecting the silica particles, pigment, etc. together with the water-insoluble polymer to a dispersing treatment. The silica particles in the vicinity of the pigment may act as an anti-reflection film for reducing the regular reflection ray on the surface of the pigment, to reduce the bronze phenomenon.

Silica particles are classified into precipitated silica and fumed silica according to the production methods. The silica particles of both types are generally hydrophilic because of a silanol group ($-SiH_2-OH$) on the surface. In the present invention, hydrophobic silica particles, which are prepared by making at least a part of the surface hydrophobic, are used in view of the effect of reducing the bronze phenomenon by allowing the silica particles to be present in the vicinity of the pigment and in view of the affinity to the water-insoluble polymer. The hydrophobic degree of the surface of the silica particles may be evaluated by visually observing whether the stable dispersion of 1 g of silica particles in 10 g of methyl ethyl ketone is maintained for one week at 25°C.

The surface of the silica particles is made hydrophobic, for example, by 1. a method of modifying the silanol group on the surface of the silica particles with a hydrophobic group such as an alkylsilyl group preferably having from 1 to 12 carbon atoms, for example, methylsilyl group and hexylsilyl group; and 2. a method of coating the surface of the silica particles with a hydrophobic resin.
Examples of the agent for the hydrophobic treatment include organochlorosilanes, organoalkoxysilanes, organodisilazanes, cyclic organoplysilazanes, and linear organopolysiloxanes.
Examples of the method of modifying the silanol group on the silica surface with the hydrophobic group such as an alkylsilyl group include a method of allowing an alkali metal salt of alkylsilanol to react with a water-dispersed silica colloid (JP 7-33250B); a method of adding an organic solvent, a cationic surfactant and an alkyltrialkoxysilane to a water-dispersed silica colloid, azeotropically removing water, and then refluxing under heating (JP 6-73389A); and a method of allowing an alkyltrialkoxysilane, an organohalogenated silicon compound, etc. to react with a wet or dry silica (JP 6-206720A and JP 7-187647A).

The degree of modification of the surface silanol group by the hydrophobic treatment is preferably 5 mol % or more, more preferably 10 mol % or more, and still more preferably 20 mol % or more, each based on the silanol group being originally present. The alkylsilyl group for modifying the silanol group preferably has a straight or branched alkyl group of 1 to 12 carbon atoms, and examples thereof include methylsilyl group, ethylsilyl group, n-propylsilyl group, isopropylsilyl group, n-butylsilyl group, t-butylsilyl group, isobutylsilyl group, pentylsilyl group, hexylsilyl group, 2-ethylhexylsilyl group, octylsilyl group, and dodecylsilyl group.

Since the silanol group on the silica surface can ionically adsorb amino group and imino group, the degree of modification of the silanol group with the hydrophobic group is determined by measuring the amounts of di-n-butylamine adsorbed by the silica before and after the modification.

In view of reducing the bronze phenomenon, the average particle size of the silica particles is preferably 3 nm or more and 100 nm or less, more preferably 50 nm or less, still more preferably 30 nm or less, and particularly preferably 20 nm or less. Specifically, the average particle size is preferably from 3 to 100 nm, more preferably from 3 to 50 nm, still more preferably from 3 to 30 nm, and particularly preferably from 3 to 20 nm. The average particle size may be measured by the method described below.

Water-insoluble polymer

Examples of the water-insoluble polymer include water-insoluble vinyl polymers, water-insoluble ester polymers and water-insoluble urethane polymers, with the water-insoluble vinyl polymers being preferred in view of the stability of the water dispersion. The water-insoluble polymer referred to herein means a polymer which dissolves, after dried at 105 °C for 2 h, in 100 g of water at 25 °C in an amount of 10 g or less, preferably 5 g or less, and more preferably 1 g or less. If the water-insoluble polymer has a salt-forming group, the dissolved amount is determined after neutralizing 100% of the salt-forming groups with acetic acid or sodium hydroxide according to the nature of the salt-forming group.

The water-insoluble polymer preferably has at least one constitutional unit selected from the constitutional units derived from a monomer A having a salt-forming group, a hydrophobic monomer B and a macromer C.

Such water-insoluble polymer is preferably produced by the copolymerization of a mixture (also referred to as "monomer mixture") containing at least one monomer selected from the monomer A containing a salt-forming group-monomer (also referred to as "component A"), the hydrophobic monomer B (also referred to as "component B"), and the macromer C (also referred to as "component C").

In view of a sufficient optical density of printed images, the water-insoluble graft polymer preferably contains the constitutional unit derived from the macromer C.

The component A is used to enhance the dispersion stability of the dispersion to be produced, and may include cationic monomers and anionic monomers. Specific examples described in JP 9-286939A, column 7, line 24 of page 5 to column 8, line 29 of the same page are usable in the present invention. Examples of the salt-forming group include carboxyl group, sulfonic acid group, phosphoric acid group, amino group, and ammonium group.

Representative examples of the cationic monomer include unsaturated amine-containing monomers and unsaturated ammonium salt-containing monomers, with N,N-dimethylaminoethyl (meth)acrylate and N-(N',N'-dimethylaminopropyl) (meth)acrylamide being preferred.

Representative examples of the anionic monomer include unsaturated carboxylic acid monomers, unsaturated sulfonic acid monomers, and unsaturated phosphoric acid monomers.

Examples of the unsaturated carboxylic acid monomer include acrylic acid, methacrylic acid, crotonic acid, itaconic acid, maleic acid, fumaric acid, citraconic acid, and 2-methacryloyloxymethylsuccinic acid.

Examples of the unsaturated sulfonic acid monomer include styrenesulfonic acid, 2-acrylamido-2-methylpropanesulfonic acid, 3-sulfopropyl (meth)acrylate, and bis(3-sulfopropyl) itaconate.

Examples of the unsaturated phosphoric acid monomer include vinylphosphonic acid, vinyl phosphate, bis(methacryloxyethyl) phosphate, diphenyl-2-acryloyloxyethyl phosphate, diphenyl-2-methacryloyloxyethyl phosphate, and dibutyl-2-acryloyloxyethyl phosphate.

In view of the dispersion stability and ejection property, the anionic monomer is preferably the unsaturated carboxylic acid monomer and more preferably acrylic acid or methacrylic acid.

The above component A may be used alone or in combination of two or more.

The hydrophobic monomer as the component B is used to improve the water resistance, rubbing resistance and optical density of printed images, and may include alkyl (meth)acrylates, alkyl(meth)acrylamides, and aromatic ring-containing monomers.

Examples of the alkyl (meth)acrylate include (meth)acrylic esters having an alkyl group of 1 to 22 carbon atoms such as methyl (meth)acrylate, ethyl (meth)acrylate, (iso)propyl (meth)acrylate, (iso or tertsary)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, and (iso)stearyl (meth)acrylate.

Examples of the alkyl(meth)acrylamide include (meth)acrylamide and (meth)acrylamides having an alkyl group of 1 to 22 carbon atoms on the nitrogen atom such as dimethyl(meth)acrylamide, diethyl(meth)acrylamide, dibutyl(metb)acrylamide, t-butyl(meth)acrylamide, octyl(meth)acrylamide, and dodecyl(meth)acrylamide.

Examples of the aromatic ring-containing monomer include styrenic monomers such as styrene, 2-methylstyrene, vinyltoluene; aryl esters of (meth)acrylic acid such as benzyl (meth)acrylate and phenoxyethyl (meth)acrylate; and vinyl monomers having an aromatic hydrocarbon group of 6 to 22 carbon atoms such as ethylvinylbenzene, 4-vinylbiphenyl, 1,1-diphenylethylene, vinylnaphthalene, and chlorostyrene.

The term "(iso or tertiary)" referred to herein means that the substituent group just follows is iso, tertiary or normal, and the term "(iso)" means that the substituent group just follows is iso or normal. The term "(meth)acrylate" includes both of acrylate and methacrylate.

In view of improving the optical density of printed images, the component B is preferably the aromatic ring-containing monomer, more preferably the styrenic monomer (component B-1), and still more preferably styrene or 2-methylstyrene. The content of the component B-1 in the component B is preferably from 10 to 100 % by weight and more preferably from 20 to 80 % by weight in view of improving the optical density of printed images and highlighter-fastness.

In view of improving the gloss of the water-based ink, the component B is preferably the aromatic ring-containing monomer, more preferably the aryl ester of (meth)acrylic acid (component B-2), and still more preferably a (meth)acrylate having an arylalkyl group of a carbon number of from 7 to 22, preferably from 7 to 18, and more preferably from 7 to 12 or a (meth)acrylate having an aryl group of a carbon number of 6 to 22, preferably from 6 to 18, and more preferably from 6 to 12. Specific examples of such monomer include benzyl (meth)acrylate and phenoxyethyl (meth)acrylate. The content of the component B-2 in the component B is preferably from 10 to 100 % by weight and more preferably from 20 to 80 % by weight in view of improving the gloss.

The above component B is used alone or in combination of two or more, and the combined use of the component B-1 and the component B-2 is also preferred.

The component C is used to stably disperse the pigment and silica particles with the water-insoluble polymer and may include a macromer of a number average molecular weight of from 500 to 100,000, preferably from 1,000 to 10,000 which is mono-terminated with a polymerizable functional group such as an unsaturated group.

The number average molecular weight of the component C is measured by a gel permeation chromatography using a standard polystyrene and a 50 mmol/L solution of acetic acid in tetrahydrofuran as the solvent.

The component C may include (C-1) a styrene-based macromer, (C-2) an alkyl (metb)acrylate-based macromer, (C-3) an aromatic ring-containing (meth)acrylate-based macromer, and (C-4) a silicon-based macromer, each being described below in detail.

(C-1) Styrene-based macromer

The styrene-based macromer is a macromer including the constitutional unit derived from a styrenic monomer (monomer C-1) such as styrene, α-methylstyrene, and vinyltoluene, with styrene being preferred.

Examples of the styrene-based macromer include styrene homopolymers mono-terminated with a polymerizable functional group and styrene-comonomer copolymers mono-terminated with a polymerizable functional group. The polymerizable functional group at one of the terminal ends is preferably acryloyloxy group or methacryloyloxy group, and the water-insoluble graft polymer including the constitutional unit derived from the styrene-based macromer is obtained by the copolymerization thereof.

Examples of the comonomer include acrylonitrile, (meth)acrylic esters (monomer C-2) described below, and aromatic ring (exclusive of styrene)-containing (metb)acrylate monomers (monomer C-3).

In view of the rubbing resistance, the content of the constitutional unit derived from the styrenic monomer (monomer C-1) in the side chain introduced by the styrene-based macromer or the macromer is preferably 60 % by weight or more, more preferably 70 % by weight or more, and particularly preferably 90 % by weight or more (each inclusive of 100%). The styrene-based macromer is commercially available under the tradenames of AS-6(S), AN-6(S), and HS-6(S), each of Toagosei Co., Ltd.

(C-2) Alkyl (meth)acrylate-based macromer

The alkyl (metb)acrylate-based macromer is a macromer including the constitutional unit derived from the (meth)acrylic ester having an alkyl or hydroxyalkyl group of from 1 to 22, preferably from 1 to 18 carbon atoms (monomer C-2).

Examples of the (meth)acrylic ester include methyl (meth)acrylate, ethyl (meth)acrylate, (iso)propyl (meth)acrylate, 2-hydroxyethyl (meth)acrylate, (iso or tertiary)butyl (meth)acrylate, 2-ethylhexyl (meth)acrylate, (iso)octyl (meth)acrylate, (iso)decyl (meth)acrylate, and (iso)stearyl (meth)acrylate.

The side chain including the constitutional unit derived from the monomer C-2 is introduced by the polymerization with an alkyl (meth)acrylate-based macromer which is mono-terminated with a polymerizable functional group, for example, with methyl methacrylate-based macromer, butyl acrylate-based macromer, isobutyl methacrylate-based macromer, or lauryl methacrylate-based macromer.

Examples of the alkyl (meth)acrylate-based macromer include homopolymers of an alkyl (meth)acrylate which are mono-terminated with a polymerizable functional group and copolymers of an alkyl (meth)acrylate with a comonomer which are mono-terminated with an polymerizable functional group. The polymerizable functional group is preferably acryloyloxy group or methacryloyloxy group. Examples of the comonomer include the styrenic monomer (monomer C-1) and the aromatic ring (exclusive of styrene)-containing (meth)acrylate monomer (monomer C-3) described below.

In view of the rubbing resistance, the content of the constitutional unit derived from the (meth)acrylic ester (monomer C-2) in the side chain introduced by the alkyl (meth)acrylate-based macromer or the macromer is preferably 60 % by weight or more, more preferably 70 % by weight or more, and particularly preferably 90 % by weight or more (each inclusive of 100%).

(C-3) Aromatic ring-containing (meth)acrylate-based macromer

The aromatic ring-containing (meth)acrylate-based macromer is a macromer including the constitutional unit derived from the aromatic ring (exclusive of styrene)-containing (meth)acrylate monomer (monomer C-3). The aromatic ring-containing (meth)acrylate monomer is preferably a monomer represented by the following formula 1:

$$CH_2=CR^1COOR^2 \qquad (1)$$

wherein $R^1$ is a hydrogen atom or a methyl group and $R^2$ is an arylalkyl group having from 7 to 22 carbon atoms or an aryl group having from 6 to 22 carbon atoms, each being optionally substituted.

Examples thereof include benzyl (meth)acrylate, phenyl (meth)acrylate, 2-phenylethyl (meth)acrylate, phenoxyethyl (meth)acrylate, 1-naphthyl acrylate, 2-naphthyl (meth)acrylate, phthalimidomethyl (meth)acrylate, p-nitrophenyl (meth) acrylate, 2-hydroxy-3-phenoxypropyl (meth)acrylate, 2-methacryloyloxyethyl-2-hydroxypropyl phthalate, and 2-acryloyloxyethyl phthalate, with benzyl (meth)acrylate being particularly preferred. These (meth)acrylates may be used alone or in combination of two or more.

The side chain including the constitutional unit derived from the aromatic ring-containing (meth)acrylate is introduced by the copolymerization with an aromatic ring-containing (meth)acrylate-based macromer which is mono-terminated with a polymerizable functional group.

Examples of the aromatic ring-containing (meth)acrylate-based macromer include homopolymers of the aromatic ring-containing (meth)acrylate which are mono-terminated with a polymerizable functional group and copolymers of the aromatic ring-containing (meth)acrylate with a comonomer which are mono-terminated with a polymerizable functional group. The polymerizable functional group is preferably acryloyloxy group or methacryloyloxy group. Examples of the comonomer include the styrenic monomer (monomer C-1) and the (meth)acrylic ester (monomer C-2).

In the side chain introduced by the aromatic ring-containing (meth)acrylate-based macromer or the macromer, the content is the largest for the constitutional unit derived from the aromatic ring-containing (meth)acrylate.

(C-4) Silicone-based macromer

The water-insoluble graft polymer may include an organopolysiloxane chain as a side chain. This side chain is introduced by the copolymerization of a silicone-based macromer which is mono-terminated with a polymerizable functional group, which is represented by the following formula 2:

$$CH_2=C(CH_3)-COOC_3H_6-[Si(CH_3)_2-O]_t-Si(CH_3)_3 \qquad (2)$$

wherein t is a number of from 8 to 40.

Of the above macromers, the styrene-based macromer which is mono-terminated with the polymerizable functional group is preferred because the affinity to the pigment is high and the storage stability is improved.

The above macromers may be used alone or in combination of two or more.

If the polymer used in the present invention is a water-insoluble graft polymer, the weight ratio, main chain/side chain, is preferably from 1/1 to 20/1, more preferably from 3/2 to 15/1, and particularly preferably from 2/1 to 10/1 in view of improving the rubbing resistance and storage stability. The polymerizable functional group is included in the side chain for the calculation.

In addition to the components A, B and C, the monomer mixture preferably contains a hydroxyl group-containing monomer D (also referred to as "component D").

The component D is used to enhance the dispersion stability of the water dispersion. Examples of the component D include 2-hydroxyethyl (meth)acrylate, 3-hydroxypropyl (meth)acrylate, polyethylene glycol (meth)acrylate (n = 2 to 30, wherein n is an average molar number of addition of oxyalkylene units and the same is applied below), polypropylene glycol (n = 2 to 30) (meth)acrylate, and poly(ethylene glycol(n = 1 to 15)·propylene glycol (n = 1 to 15)) (meth)acrylate, with 2-hydroxyethyl (meth)acrylate, polyethylene glycol monomethacrylate, and polypropylene glycol methacrylate being preferred.

The monomer mixture may further contain a monomer E (also referred to as "component E") represented by the following formula 3:

$$CH_2=-C(R^3)COO(R^4O)_pR^5 \qquad (3)$$

wherein $R^3$ is a hydrogen atom or an alkyl group having from 1 to 5 carbon atoms; $R^4$ is a divalent hydrocarbon group having from 1 to 30 carbon atoms which optionally contains a hetero atom; $R^5$ is a monovalent hydrocarbon group having from 1 to 30 carbon atoms which optionally contains a hetero atom ; and p is a number of from 1 to 60, preferably from 1 to 30 showing an average molar number of addition.

The component E creates excellent effects of improving the jetting stability of water-based inks and preventing the deformation of printed images even upon continuous printing operations.

Examples of the optional hetero atoms for $R^4$ or $R^5$ of the formula 3 include nitrogen atom, oxygen atom, halogen atom and sulfur atom.

Examples of $R^4$ and $R^5$ include mono- or divalent aromatic groups having from 6 to 30 carbon atoms, mono- or divalent heterocyclic groups having from 3 to 30, and alkyl groups or alkylene groups each having from 1 to 30 carbon atoms, each optionally having a substituent group. $R^4$ and $R^5$ may be a combination of two or more of these groups. Examples of the substituent group include aromatic groups, heterocyclic groups, alkyl groups, halogen atoms and amino groups.

Preferred examples of $R^4$ include phenylene group optionally having a substituent group having from 1 to 24 carbon atoms; aliphatic alkylene groups having from 1 to 30, preferably from 1 to 20 carbon atoms; aromatic ring-containing alkylene groups having from 7 to 30 carbon atoms; and hetero ring-containing alkylene groups having from 4 to 30 carbon atoms. Particularly preferred examples of $R^4O$ include oxyethylene group, oxy(iso)propylene group, oxytetramethylene group, oxyheptamethylene group, oxyhexamethylene group, oxyalkylene groups having from 2 to 7 carbon atoms composed of at least one of the preceding oxyalkylene groups, and oxyphenylene group.

Preferred examples of $R^5$ include phenyl group; aliphatic alkyl groups having from 1 to 30 carbon atoms, preferably aliphatic alkyl groups having from 1 to 20 carbon atoms which may be branched; aromatic ring-containing alkyl groups having from 7 to 30 carbon atoms; and hetero ring-containing alkyl groups having from 4 to 30 carbon atoms. $R^5$ is more preferably a phenyl group or an alkyl group having from 1 to 12 carbon atoms such as methyl group, ethyl group, (iso) propyl group, (iso)butyl group, (iso)pentyl group, and (iso)hexyl group.

Examples of the components E include methoxypolyethylene glycol (meth)acrylate (p in the formula 3 is from 1 to 30), methoxypolytetramethylene glycol (meth)acrylate (p = 1 to 30), ethoxypolyethylene glycol (meth)acrylate (p = 1 to 30), (iso)propoxypolyethylene glycol (meth)acrylate (p =1 to 30), butoxypolyethylene glycol (meth)acrylate (p = 1 to 30), octoxypolyethylene glycol (meth)acrylate (p = 1 to 30), methoxypolypropylene glycol (meth)acrylate (p = 1 to 30), and methoxy(ethylene glycol·propylene glycol copolymer) (meth)acrylate (p = 1 to 30; p = 1 to 29 for the ethylene glycol portion), with methoxypolyethylene glycol (meth)acrylate (p = 1 to 30) being preferred.

Specific examples of the components D and E which are commercially available include polyfunctional (meth) acrylate monomers (NK Ester) M-40G, 90G and 230G of Shin Nakamura Kagaku Kogyo Co., Ltd. and Blenmer series PE-90, 200 and 350, PME-100, 200, 400 and 1000, PP-1000, PP-600, PP-800, AP-150, AP-400, AP-550, AP-800, 50PEP-300, and 50POEP-800B of NOF Corporation.

Each of the component D and the component E may be used alone or in combination of two or more.

The content for each of the components A to E in the monomer mixture is as follows.

The content of the component A is preferably from 3 to 30 % by weight and more preferably from 4 to 20 % by weight in view of the dispersion stability of the resultant dispersion.

The content of the component B is preferably from 10 to 70 % by weight and more preferably from 15 to 60 % by weight in view of the water resistance, rubbing resistance and optical density of printed images.

The content of the component C is preferably from 1 to 25 % by weight and more preferably from 5 to 20 % by weight in view of stably dispersing the pigment and silica particles with the water-insoluble polymer.

The weight ratio of the content of the component A and the total content of the components B and C (A/(B + C)) is preferably from 0.01 to 1, more preferably from 0.02 to 0.67, and still more preferably from 0.03 to 0.50 in view of the long-term storage stability and jetting properties of resulting water-based inks.

The content of the component D is preferably from 5 to 40 % by weight and more preferably from 7 to 20 % by weight in view of the jetting properties and optical density of printed images.

The content of the component E is preferably from 5 to 50 % by weight and more preferably from 10 to 40 % by weight in view of the jetting properties and dispersion stability.

The total content of the component A and component D is preferably from 6 to 60 % by weight and more preferably from 10 to 50 % by weight in view of the dispersion stability in water and optical density of printed images.

The total content of the component A and component E is preferably from 6 to 75 % by weight and preferably from 13 to 50 % by weight in view of the dispersion stability in water and jetting properties.

The total content of the component A, component D and component E is preferably from 6 to 60 % by weight, more preferably from 7 to 50 % by weight, and still more preferably from 13 to 45 % by weight in view of the dispersion stability in water, optical density of printed images and jetting properties.

The content of the constitutional unit derived from each of the components A to E in the water-insoluble polymer is the same as the each content described above.

The water-insoluble polymer is produced by copolymerizing the above monomer mixture by a known polymerization method such as bulk polymerization, solution polymerization, suspension polymerization and emulsion polymerization, with the solution polymerization being preferred because the effects such as a high optical density of printed images and high bleed resistance are enhanced.

The solvents for the solution polymerization are preferably organic polar solvents having a high affinity to the water-insoluble polymers, which preferably have a solubility in water of 50% by weight or less and 5% by weight or more at 20 °C. Examples of the organic polar solvents include aliphatic alcohols such as butoxyethanol; aromatic compounds such as toluene and xylene; ketones such as methyl ethyl ketone and methyl isobutyl ketone; and esters such as ethyl acetate, with methyl ethyl ketone, methyl isobutyl ketone, toluene, xylene, butoxyethanol and mixed solvents of at least one preceding solvent with water being preferred.

The polymerization can be performed in the presence of a known polymerization initiator, for example, azo compounds such as 2,2'-azobisisobutyronitrile and 2,2'-azobis(2,4-dimethylvaleronitrile) and organic peroxides such as tert-butyl peroxyoctoate and dibenzoyl peroxide.

The amount of the polymerization initiator to be used is preferably from 0.001 to 5 mol and more preferably from 0.01 to 2 mol per one mole of the monomer mixture.

The polymerization can be performed also in the presence of a known chain transfer agent, for example, mercaptans such as octyl mercaptan and 2-mercaptoethanol, and thiuram disulfides.

The polymerization conditions of the monomer mixture vary depending on the types of the polymerization initiator, monomers and solvent. Typically, the polymerization is carried out at from 30 to 100 °C and preferably from 50 to 80 °C for from 1 to 20 h preferably in an atmosphere of inert gas such as nitrogen gas and argon gas.

After the polymerization, the produced polymer can be separated from the reaction product solution by a known method such as reprecipitation and solvent removal by distillation.

The weight average molecular weight of the water-insoluble polymer to be produced is preferably from 5,000 to 500,000, more preferably from 10,000 to 400,000, and still more preferably from 10,000 to 300,000 in view of the dispersion stability of the pigment, water resistance and jetting properties.

The weight average molecular weight of the polymer is measured by a gel permeation chromatography calibrated by a standard polystyrene using dimethylformamide dissolving 60 mmol/L of phosphoric acid and 50 mmol/L of lithium bromide as the eluent.

The solid content of the solution of the water-insoluble polymer is preferably from 3 to 30%, more preferably from 5 to 20%, and most preferably from 10 to 15%.

If the water-insoluble polymer has a salt-forming group derived from the salt-forming group-containing monomer A, it is used after neutralization. The neutralizing agent is selected from acids and bases according to the types of the salt-forming groups. Examples of the neutralizing agents include acids such as hydrochloric acid, acetic acid, propionic acid, phosphoric acid, sulfuric acid, lactic acid, succinic acid, glycolic acid, gluconic acid and glyceric acid; and bases such as lithium hydroxide, sodium hydroxide, potassium hydroxide, ammonia, methylamine, dimethylamine, trimethylamine, ethylamine, diethylamine, triethylamine, triethanolamine and tributylamine.

The degree of neutralization of the salt-forming groups is preferably from 10 to 200%, more preferably from 20 to 150% and most preferably from 50 to 150%. The degree of neutralization of anionic salt-forming groups is determined from the following formula.

$$\{[\text{weight of neutralizing agent (g)/equivalent of neutralizing agent}]/$$
$$[\text{acid value of polymer (KOH mg/g)} \times \text{weight of polymer (g)}/$$
$$(56 \times 1000)]\} \times 100$$

The degree of neutralization of cationic salt-forming groups is determined from the following formula.

$$\{[\text{weight of neutralizing agent (g)/equivalent of neutralizing agent}]/$$

$$[\text{amine value of polymer (HCl mg/g)} \times \text{weight of polymer (g)}/$$

$$(36.5 \times 1000)]\} \times 100$$

The acid value and the amine value can be calculated from the amounts of constitutional units of the polymer or can be obtained by the titration of a polymer solution in a suitable solvent such as methyl ethyl ketone.

Production of water dispersion for inkjet printing

As described above, the reduction of the bronze phenomenon is attributable to the silica particles present in the vicinity of the pigment Therefore, the water dispersion for inkjet printing of the present invention is produced by the dispersion treatment of a mixture of the pigment, silica particles, water-insoluble polymer, organic solvent, and water. The pigment, silica particles and water-insoluble polymer are as described above. The water dispersion for inkjet printing is produced, for example, by a method including the following steps 1 and 2:

Step 1: a step of subjecting a mixture of the silica particles, pigment other than the silica particles, water-insoluble polymer, organic solvent and water to a dispersion treatment; and
Step 2: a step of removing the organic solvent from the dispersion obtained in the step 1.

In the step 1, the silica particles, pigment other than the silica particles, water insoluble polymer, organic solvent and water are first mixed with one another. Preferably, the water-insoluble polymer is dissolved in the organic solvent and then the silica particles, pigment other than the silica particles, water, and optional components such as a neutralizing agent and surfactant are mixed with the resultant solution, to obtain an oil-in-water dispersion.
The content of each of the components in the mixture is preferably from 5 to 50 % by weight and more preferably from 5 to 30 % by weight for the pigment; preferably from 1 to 20 % by weight and more preferably from 1 to 10 % by weight for the silica particles; preferably from 10 to 70 % by weight and more preferably from 10 to 50 % by weight for the organic solvent; preferably from 2 to 40 % by weight and more preferably from 2 to 20 % by weight for the water-insoluble polymer; and preferably from 10 to 80 % by weight and more preferably from 20 to 70 % by weight for water.
When the water-insoluble polymer has the salt-forming group, the use of the neutralizing agent is recommended. Alternatively, the water-insoluble polymer may be neutralized by the neutralizing agent before mixing. Although the degree of neutralization is not specifically limited, the neutralization is generally carried out so as to regulate the pH of the dispersion to be finally obtained neutral, for example, within a range of from 4.5 to 10. The pH may be also determined according to the preferred degree of neutralization of the water-insoluble polymer mentioned above.
The organic solvent is preferably selected from alcohol solvents, ketone solvents and ether solvents. More preferred are those having a solubility to water of preferably from 5 to 80 % by weight and more preferably 50 % by weight or less and 10 % by weight or more at 20 °C. The solubility referred to herein is the weight of the organic solvent that will dissolve in 100 g of water. For example, a solubility of 50 % by weight means that 50 g of the organic solvent will dissolve in 100 g of water.
Examples of the alcohol solvent include ethanol, isopropanol, n-butanol, tert-butanol, isobutanol, and diacetone alcohol. Examples of the ketone solvent include acetone, methyl ethyl ketone, diethyl ketone, and methyl isobutyl ketone. Examples of the ether solvent include dibutyl ether, tetrahydrofuran, and dioxane. Preferred are isopropanol, acetone and methyl ethyl ketone, and more preferred is methyl ethyl ketone. These solvents may be used alone or in combination of two or more.
Any dispersion methods are available for the dispersion of the mixture in the step 1 as long as the water-insoluble polymer particles are made into fine particles having a desired average particle size.
The dispersion is carried out, for example, using a kneading machine such as a roll mill, a kneader and an extruder; a dispersing machine such as a sand mill and a bead mill; or a high-pressure homogenizer of chamber type. Preferred is a wet milling in a dispersing machine containing dispersion media, because the silica particles and the pigment are uniformly mixed.
In view of the hardness, the dispersion media are preferably made of ceramic beads of titania ($TiO_2$), zirconia ($ZrO_2$), zircon ($ZrSiO_4$), alumina ($Al_2O_3$), etc., with titania and zirconia being particularly preferred.
The particle size of the dispersion media is generally from 30 to 500 $\mu$m and preferably from 30 to 400 $\mu$m in view of mixing the silica particles and the pigment uniformly.
In the dispersion treatment by a wet milling, the weight ratio of dispersion media/dispersion liquid (inclusive of all the dispersion components such as the pigment, water-insoluble polymer, water, organic solvent) is generally from 10/1 to 4/6 and more preferably from 10/1 to 5/5 in view of mixing the silica particles and the pigment uniformly.

The peripheral speed of the dispersing machine when using dispersion media is expressed by the peripheral speed of the tip of stirring blade or the rotation speed of a vessel when the stirring blade is not used. The peripheral speed of the tip of stirring blade is preferably from 3 to 30 m/s and more preferably from 5 to 25 m/s, and the rotation speed of a vessel is preferably from 0.1 to 1 m/s.

To mix the silica particles and the pigment uniformly, the dispersion time is preferably from 1 to 15 h, more preferably from 2 to 15 h, still more preferably from 3 to 10 h, and particularly preferably from 4 to 10 h. The dispersion temperature is preferably from 0 to 80 °C, more preferably from 0 to 60 °C, still more preferably from 5 to 40 °C, and particularly preferably from 5 to 30 °C.

In the step 2, the organic solvent is removed to convert the dispersion obtained in the step 1 into an aqueous system, to obtain a water dispersion of the water-insoluble polymer particles having a desired average particle size. The removal of the organic solvent is conducted by a general method such as a vacuum distillation. The resultant water dispersion is substantially free from the organic solvent, and the content of the organic solvent therein is preferably 0.1% by weight or less and more preferably 0.01% by weight or less.

It is preferred to remove coarse particles by filtering the resultant water dispersion.

The obtained water dispersion is one that includes the water insoluble polymer particles containing the pigment and silica particles, namely, the solid components including the water-insoluble polymer containing the pigment and silica particles are dispersed in the solvent mainly composed of water. Therefore, the obtained water dispersion is hereinafter referred to as the water dispersion of the pigment-silica-containing polymer particles.

The shape of the water-insoluble polymer particles containing the pigment and silica particles is not specifically limited as long as the particles are formed from the pigment, silica particles and water-insoluble polymer.

To prevent the clogging of printer nozzles and obtain a high optical density of printed images, the average particle size of the pigment-silica-containing polymer particles is preferably from 30 to 200 nm, more preferably from 50 to 130 nm, and still more preferably from 60 to 120 nm.

Water dispersion and Water-based ink

The water dispersion and water-based ink for inkjet printing of the present invention contains each component in the following content.

The content of the silica particles is preferably from 0.1 to 10 % by weight, more preferably from 0.3 to 8 % by weight, and still more preferably from 0.5 to 5 % by weight in view of reducing the bronze phenomenon.

The content of the pigment is preferably from 1 to 10 % by weight, more preferably from 2 to 10 % by weight, still more preferably 3 to 10 % by weight, and particularly preferably from 4 to 8 % by weight in view of enhancing the optical density of printed images.

The content of the water-insoluble polymer is preferably from 0.5 to 10 % by weight, more preferably from 1 to 8 % by weight, and still more preferably from 1 to 5 % by weight in view of the dispersion stability of the silica particles and pigment. The weight ratio of the contents of the silica particles and pigment (silica particles/pigment) is from 1/10 to 5/1, preferably from 1/5 to 3/1, and still more preferably from 1/4 to 2/1 in view of reducing the bronze phenomenon.

The weight ratio of the water-insoluble polymer to the total of the pigment and silica (water-insoluble polymer/ (pigment + silica)) is preferably from 5/95 to 90/10, more preferably from 10/90 to 75/25, and still more preferably from 20/80 to 50/50 in view of enhancing the optical density of printed images, rubbing resistance and dispersion stability.

The water dispersion of the present invention may be directly used as the water-based ink containing a solvent mainly composed of water, and if necessary, the water dispersion may be added with an additive which has been commonly used in the production of water-based inks for inkjet printing, such as a wetting agent, a penetrating agent, a dispersant, a viscosity regulator, a defoaming agent, a fungicide and a corrosion inhibitor.

The content of water in the water dispersion is preferably from 30 to 90 % by weight and more preferably from 40 to 80 % by weight, and the content of water in the water-based ink is preferably from 30 to 95 % by weight and more preferably from 40 to 90 % by weight.

The surface tension (20°C) of the water dispersion is preferably from 30 to 65 mN/m and more preferably from 35 to 60 mN/m. The surface tension (20 °C) of the water-based ink is preferably from 23 to 50 mN/m, more preferably from 23 to 45 mN/m, still more preferably from 23 to 40 mN/m, and particularly preferably from 23 to 30 mN/m.

The viscosity (20°C) of the water dispersion, when the solid content is 20 % by weight, is preferably from 1 to 12 mPa·s, more preferably from 1 to 9 mPa·s, still more preferably from 2 to 6 mPa·s and particularly preferably from 2 to 5 mPa·s in view of obtaining a water-based ink having an appropriate viscosity.

To maintain good jetting properties, the viscosity (20°C) of the water-based ink is preferably from 2 to 12 mPa·s, more preferably from 2.5 to 10 mPa·s, and still more preferably from 2.5 to 6 mPa·s.

The following examples further describe and demonstrate embodiments of the present invention. The examples are given only for the purpose of illustration and are not to be construed as limitations of the present invention.

In the following production example, examples and comparative examples, "part(s)" and "%" are based on weight, unless otherwise noted. PRODUCTION EXAMPLE 1 Production of water-insoluble polymer
Into 120 parts of a monomer mixture (100 parts of solid components) containing:

46 parts of benzyl methacrylate (reagent manufactured by Wako Pure Chemical Industries, Ltd.),
14 parts of methacrylic acid (reagent manufactured by Wako Pure Chemical Industries, Ltd.),
40 parts (20 parts of solid component) of styrene macromer ("AS-6S," tradename, manufactured by Toagosei Co., Ltd.: number average molecular weight: 6000, solid content: 50%, polymerizable functional group: methacryloyloxy group), and
20 parts of polypropylene glycol monomethacrylate ("Blenmer PP-500," tradename, manufactured by NOF Corporation: average molar number of addition of propyleneoxide: 9, terminal ends: hydrogen),
10% of a mixture of 20 parts of an organic solvent (methyl ethyl ketone), 1 part of a polymerization chain transfer agent (2-mercaptoethanol, reagent manufactured by Wako Pure Chemical Industries, Ltd.), and 1 part of a polymerization initiator (2,2'-azobis(2,4-dimethylvaleronitrile), "V-65" manufactured by Wako Pure Chemical Industries, Ltd.) was added, and then mixed. After the displacement with nitrogen gas, a mixed solution was obtained.

Then, the rest of the mixture was added dropwise from a dropping funnel to the mixed solution at 75°C under stirring to allow the polymerization to proceed.
After about 2 h from the completion of the addition at 75 °C, the reaction mixture was aged for one hour at 80 °C, to obtain a solution of a water-insoluble polymer (weight average molecular weight: 18,000).

EXAMPLE 1

The polymer solution obtained in Production Example 1 was vacuum-dried. A solution of 25 parts of the dried polymer thus obtained in 70 parts of methyl ethyl ketone was mixed with 83 parts of 30% silica sol (silica subjected to hydrophobic treatment; "MEK-ST," tradename, manufactured by Nissan Chemical Industries, Ltd.). To the resultant mixture, 4.1 parts of a neutralizing agent (5 N aqueous solution of sodium hydroxide) and 230 parts of ion-exchanged water were added to neutralize the salt-forming groups (degree of neutralization: 75%). After further adding 50 parts of copper phthalocyanine pigment (Pigment Blue 15:3, average primary particle size: 70 nm), the mixture was pre-dispersed in a disper. Then, the pre-dispersed mixture was subjected to a dispersion treatment in Pico Mill manufactured by Asada Iron Works Co., Ltd. (zirconia beads (particle size: 50 $\mu$m), filling ratio: 80 % (dispersion media/dispersion liquid = 80/20), temperature: 10 °C) for 1 hour at a peripheral speed of 8 m/s of the tip of stirring blades. The obtained mixture was passed through Microfluidizer (tradename, manufactured by Microfluidics) 10 times under 200 MPa for further dispersion.
After adding 250 parts of ion-exchanged water and mixing, a whole part of methyl ethyl ketone and a part of water were removed at 60 °C under vacuum. Then, coarse particles were removed by the filtration using a 25-mL needleless syringe (manufactured by Terumo Corporation) equipped with a 5-$\mu$m filter (acetylcellulose membrane with a 2.5-cm outer diameter manufactured by Fuji Photo Film Co., Ltd.), to obtain a water dispersion of pigment-silica-containing polymer particles with a solid concentration of 20%.
To 40 parts of the water dispersion of pigment-silica-containing polymer particles, were added 10 parts of glycerol, 7 parts of triethylene glycol monobutyl ether, 1 part of Surfynol 465 (manufactured by Nissin Chemical Industry Co., Ltd.), 0.3 part of Proxel XL2 (manufactured by Avecia KK), and 41.7 parts of ion-exchanged water. Coarse particles were removed by filtering the resultant mixture through a 25-mL needleless syringe equipped with a 1.2-$\mu$m filter (acetylcellulose membrane with a 2.5-cm outer diameter manufactured by Fuji Photo Film Co., Ltd.), to obtain a water-based ink 1.

EXAMPLE 2

The polymer solution obtained in Production Example 1 was vacuum-dried. A solution of 25 parts of the dried polymer thus obtained in 70 parts of methyl ethyl ketone was mixed with 37.5 parts of 40% silica sol (silica subjected to hydrophobic treatment; average particle size: 10 to 20 nm (catalog value); "TOL-ST," tradename, manufactured by Nissan Chemical Industries, Ltd.). To the resultant mixture, 4.1 parts of a neutralizing agent (5 N aqueous solution of sodium hydroxide) and 230 parts of ion-exchanged water were added to neutralize the salt-forming groups (degree of neutralization: 75%). After further adding 60 parts of copper phthalocyanine pigment (Pigment Blue 15:3, average primary particle size: 70 nm), the mixture was dispersed in the same manner as in Example 1. The obtained mixture was passed through Microfluidizer (tradename, manufactured by Microfluidics) 10 times under 200 MPa for further dispersion.
After adding 250 parts of ion-exchanged water and mixing, a whole part of methyl ethyl ketone and a part of water were removed at 60 °C under vacuum. Then, coarse particles were removed by a filtration using a 25-mL needleless syringe (manufactured by Terumo Corporation) equipped with a 5-$\mu$m filter (acetylcellulose membrane with a 2.5-cm outer diameter manufactured by Fuji Photo Film Co., Ltd.), to obtain a water dispersion of pigment-silica-containing polymer particles with a solid concentration of 20%.

To 33.3 parts of the water dispersion, were added 10 parts of glycerol, 7 parts of triethylene glycol monobutyl ether, 1 part of Surfynol 465, 0.3 part of Proxel XL2, and 48.4 parts of ion-exchanged water. Coarse particles were removed by filtering the resultant mixture through a 25-mL needleless syringe equipped with a 1.2-μm filter (acetylcellulose membrane with a 2.5-cm outer diameter manufactured by Fuji Photo Film Co., Ltd.), to obtain a water-based ink 2.

COMPARATIVE EXAMPLE 1

The polymer solution obtained in Production Example 1 was vacuum-dried. To a solution of 25 parts of the dried polymer thus obtained in 70 parts of methyl ethyl ketone, 4.1 parts of a neutralizing agent (5 N aqueous solution of sodium hydroxide) and 230 parts of ion-exchanged water were added to neutralize the salt-forming groups (degree of neutralization: 75%). After further adding 75 parts of copper phthalocyanine pigment (Pigment Blue 15:3), the mixture was dispersed in the same manner as in Example 1. The obtained mixture was passed through Microfluidizer (tradename, manufactured by Microfluidics) 10 times under 200 MPa for further dispersion.

After adding 250 parts of ion-exchanged water and mixing, a whole part of methyl ethyl ketone and a part of water were removed at 60 °C under vacuum. Then, coarse particles were removed by a filtration using a 25-mL needleless syringe (manufactured by Terumo Corporation) equipped with a 5-μm filter (acetylcellulose membrane with a 2.5-cm outer diameter manufactured by Fuji Photo Film Co., Ltd.), to obtain a water dispersion of pigment-containing polymer particles with a solid concentration of 20%.

To 26.7 parts of the water dispersion, were added 10 parts of glycerol, 7 parts of triethylene glycol monobutyl ether, 1 part of Surfynol 465, 0.3 part of Proxel XL2, and 55 parts of ion-exchanged water. Coarse particles were removed by filtering the resultant mixture through a 25-mL needleless syringe equipped with a 1.2-μm filter (acetylcellulose membrane with a 2.5-cm outer diameter manufactured by Fuji Photo Film Co., Ltd.), to obtain a water-based ink 3.

COMPARATIVE EXAMPLE 2

To 26.7 parts of the water dispersion with a solid concentration of 20% obtained in Comparative Example 1, were added 10 parts of glycerol, 7 parts of triethylene glycol monobutyl ether, 1 part of Surfynol 465, 0.3 part of Proxel XL2, 5 parts of 40% hydrophilic colloidal silica ("ST-40," tradename, manufactured by Nissan Chemical Industries, Ltd.), and 50 parts of ion-exchanged water. Coarse particles were removed by filtering the resultant mixture through a 25-mL needleless syringe equipped with a 1.2-μm filter (acetylcellulose membrane with a 2.5-cm outer diameter manufactured by Fuji Photo Film Co., Ltd.), to obtain a water-based ink 4.

The water-based inks 1 to 4 which were obtained in Examples 1 and 2 and Comparative Examples 1 and 2 were tested for the bronze phenomenon, gloss and storage stability by the following methods. The results are shown in Table 1.

(1) Bronze Test

A commercially available paper for print use (photo gloss paper manufactured by Seiko Epson Corporation) was solid-printed by a commercially available ink jet printer (Model "PX-A650" manufactured by Seiko Epson Corporation) under the following printing conditions.

    Paper: Epson photo paper
    Printing quality: Photo
    Color correction: none

After being allowed to stand at 25 °C for 24 h, the solid image was tested for the bronze phenomenon at 20 °C by the following method.

The solid-printed paper was mounted on the sample table of a gonio-spectrometer ("GSP-2" manufactured by Murakami Color Research Laboratory Co., Ltd.,), and the reflection spectra in a wave range from 390 nm to 720 nm was measured under the following conditions.

    Incident angle: 45°
    Receiving angle: 45°
    Viewing angle: 2°
    Tilting angle: 0°
    Light source: halogen lamp C-ray

From the spectrum intensities at 550 nm and 630 nm in the measured reflection spectra, a reflection spectrum intensity ratio (intensity at 630 nm/intensity at 550 nm) was calculated to make an evaluation as follows.

Reflection spectrum intensity ratio exceeding 4:

the lights of a fluorescent light or sun reflected from the printed surface looks reddish.

Reflection spectrum intensity ratio exceeding 3 and not more than 4:

reddish color is hardly perceived on a photo printed paper.

Reflection spectrum intensity ratio of 3 or less:

most preferred because reddish color is hardly perceived even on a solid print.

(2) Gloss Test

The solid image obtained in Bronze Test was measured for the 20° gloss using a gloss meter ("Handy Glossmeter PG-1," tradename, manufactured by Nippon Denshoku Industries Co., Ltd.) (20 °C). The gloss is preferably 50 or more and more preferably 55 or more.

(3) Storage Stability

A water-based ink was sealed in a glass container and stored at 70 °C. After one month of the storage, the average particle size was measured by a particle size analyzer ("ELS-8000," tradename, manufactured by Otsuka Electronics Co., Ltd.), and the percent increase of particle size was calculated from the following equation:

$$(\text{Average particle size before storage/Average particle size after strorage}) \times 100.$$

The closer to 100 the percent increase, the better the storage stability. The percent increase is preferably from 90 to 110.

The average particle size of the pigment-silica-containing polymer particles was measured by using a laser particle analyzing system ELS-8000 (cumulant analysis) manufactured by Ohtsuka Denshi Co., Ltd. under the following conditions.

Measuring temperature: 25°C
Angle between incident light and detector: 90°
Number of cumulation: 100
Refractive index of dispersing solvent: 1.333 (refractive index of water)
Measuring concentration: about $5 \times 10^{-3}$ % by weight

The average particle size of the silica particles and the primary particle size of the pigment were expressed by the average values which were calculated by the image analysis of microphotographs of 100 particles taken by a scanning electron microscope. The average value was calculated using the major diameter if the particle included both the major diameter and minor diameter.

Table 1

|  | Examples | | Comparative Examples | |
|---|---|---|---|---|
|  | 1 | 2 | 1 | 2 |
| Contents (% by weight) | | | | |
| waterinsoluble polymer | 2 | 1.67 | 1.34 | 1.34 |
| pigment | 4 | 4 | 4 | 4 |
| silica | 2 | 1 | 0 | 2 |
| silica/pigment | 1/2 | 1/4 | 0 | 1/2 |
| Particle Size (nm) | | | | |
| silica particles | 12 | 12 | - | 12 |

(continued)

| | Examples | | Comparative Examples | |
|---|---|---|---|---|
| | 1 | 2 | 1 | 2 |
| polymer particles in water dispersion | 88 | 81 | 87 | 80 |
| Results of Measurements | | | | |
| 20° gloss | 67.1 | 58.8 | 61.5 | 44.2 |
| bronze (intensity ratio, 630nm/560nm) | 2.8 | 3.3 | 4.5 | 3.2. |
| storage stability of ink | 108 | 104 | 108 | 176 |

The water-based inks of Examples 1 and 2 were, as compared with the water-based ink of Comparative Example 1, effective for preventing the bronze phenomenon, and as compared with the water-based ink of Comparative Example 2, effective for preventing the bronze phenomenon and further superior in the gloss and storage stability.

The water dispersion for inkjet printing and water-based ink of the present invention are excellent in the storage stability, and also, capable of effectively preventing the bronze phenomenon of printed images.

In addition, by the production method of the present invention, such water dispersion for inkjet printing capable of reducing the bronze phenomenon of printed images is efficiently produced.

**Claims**

1. A water dispersion for inkjet printing comprising water-insoluble polymer particles, wherein the water-insoluble polymer particles contain silica, particles and a pigment other than the silica particles ,wherein a surface of the silica particles is at least partly hydrophobic.

2. A water dispersion for inkjet printing which is obtainable by subjecting a mixture comprising silica particles, a pigment other than the silica particles, a water-insoluble polymer, an organic solvent and water to a dispersion treatment, and then, removing the organic solvent, wherein a surface of the silica particles is at least partly hydrophobic.

3. The water dispersion for inkjet printing according to claim 1 or 2, wherein a content ratio of the silica particles and pigment, silica particles/pigment, is from 1/10 to 5/1 by weight.

4. The water dispersion for inkjet printing according to any one of claims 1 to 3, wherein an average particle size of the silica particles is from 3 to 100 nm

5. The water dispersion for inkjet printing according to any one of claims 1 to 4, wherein the pigment is a cyan pigment.

6. The water dispersion for inkjet printing according to claim 5, wherein a ratio, intensity at 630 nm/intensity at 560 nm, in reflection spectra of a halogen lamp C-ray from printed images is 4 or less.

7. The water dispersion for inkjet printing according to any one of claims 1 to 6, wherein the water-insoluble polymer is a copolymer which is obtainable by the copolymerization of a monomer mixture comprising at least one monomer selected from (a) a salt-forming group-containing monomer, (b) a hydrophobic monomer and (c) a macromer.

8. A water-based ink for inkjet printing comprising the water dispersion as defined in any one of claims 1 to 7.

9. A method of producing a water dispersion for inkjet printing, which comprises:

   step 1 of subjecting a mixture comprising silica particles, a surface of which being at least partly hydrophobic, a pigment other than the silica particles, a water-insoluble polymer, an organic solvent and water to a dispersion treatment, to obtain a dispersion, and
   step 2 of removing the organic solvent from the dispersion obtained in the step 1.

10. Use of a water dispersion as a water-based ink for inkjet printing, wherein the water dispersion comprises water-insoluble polymer particles which contain silica particles and a pigment other than the silica particles, wherein a surface of the silica particles is at least partly hydrophobic.

**EP 1 832 634 B1**

**Patentansprüche**

1. Wasserdispersion für den Tintenstrahldruck, umfassend wasserunlösliche Polymerteilchen, worin die wasserunlöslichen Polymerteilchen Silikateilchen und ein anderes Pigment als die Silikateilchen umfassen, worin eine Oberfläche der Silikateilchen zumindest teilweise hydrophob ist.

2. Wasserdispersion für den Tintenstrahldruck, erhältlich durch Durchführen einer Dispersionsbehandlung mit einer Mischung, umfassend Silikateilchen, ein anderes Pigment als die Silikateilchen, ein wasserunlösliches Polymer, ein organisches Lösungsmittel und Wasser, und anschließendes Entfernen des organischen Lösungsmittels, worin eine Oberfläche der Silikateilchen zumindest teilweise hydrophob ist.

3. Wasserdispersion für den Tintenstrahldruck nach Anspruch 1 oder 2, worin ein Verhältnis der Silikateilchen und des Pigmentes, Silikateilchen/Pigment, von 1/10 bis 5/1, bezogen auf das Gewicht, ist.

4. Wasserdispersion für den Tintenstrahldruck nach einem der Ansprüche 1 bis 3, worin eine durchschnittliche Teilchengröße der Silikateilchen von 3 bis 100 nm ist.

5. Wasserdispersion für den Tintenstrahldruck nach einem der Ansprüche 1 bis 4, worin das Pigment ein Cyanpigment ist.

6. Wasserdispersion für den Tintenstrahldruck nach Anspruch 5, worin ein Verhältnis, Intensität bei 630 nm/Intensität bei 550 nm, bei dem Reflektionsspektrum einer Halogenlampen-C-Strahlung von gedruckten Bildern 4 oder weniger ist.

7. Wasserdispersion für den Tintenstrahldruck nach einem der Ansprüche 1 bis 6, worin das wasserunlösliche Polymer ein Copolymer ist, erhältlich durch die Copolymerisation einer Monomermischung, umfassend zumindest ein Monomer, ausgewählt aus (a) einem Monomer mit einer salzbildenden Gruppe, (b) einem hydrophoben Monomer und (c) einem Makromer.

8. Tinte auf Wasserbasis für den Tintenstrahldruck, umfassend die Wasserdispersion wie in einem der Ansprüche 1 bis 7 definiert.

9. Verfahren zur Erzeugung einer Wasserdispersion für den Tintenstrahldruck, umfassend:

   Schritt 1: Durchführen einer Dispersionsbehandlung mit einer Mischung, umfassend Silikateilchen, wobei eine Oberfläche davon zumindest teilweise hydrophob ist, ein anderes Pigment als die Silikateilchen, ein wasserunlösliches Polymer, ein organisches Lösungsmittel und Wasser, unter Erhalt einer Dispersion; und
   Schritt 2: Entfernung des organischen Lösungsmittels von der Dispersion, erhalten im Schritt 1.

10. Verwendung einer Wasserdispersion als Tinte auf Wasserbasis für den Tintenstrahldruck, worin die Wasserdispersion wasserunlösliche Polymerteilchen umfasst, die Silikateilchen und ein anderes Pigment als die Silikateilchen enthalten, worin eine Oberfläche der Silikateilchen zumindest teilweise hydrophob ist.


**Revendications**

1. Dispersion aqueuse pour impression à jet d'encre comprenant des particules de polymère insolubles dans l'eau, dans laquelle les particules de polymère insolubles dans l'eau contiennent des particules de silice et un pigment autre que les particules de silice, dans laquelle une surface des particules de silice est au moins en partie hydrophobe.

2. Dispersion aqueuse pour impression à jet d'encre qui peut être obtenue en soumettant un mélange comprenant des particules de silice, un pigment autre que les particules de silice, un polymère insoluble dans l'eau, un solvant organique et de l'eau à un traitement de dispersion, et ensuite en enlevant le solvant organique, dans laquelle une surface des particules de silice est au moins en partie hydrophobe.

3. Dispersion aqueuse pour impression à jet d'encre selon la revendication 1 ou 2, dans laquelle un rapport de teneur en particules de silice et en pigment, particules de silice / pigment, est de 1/10 à 5/1 en poids.

4.  Dispersion aqueuse pour impression à jet d'encre selon l'une quelconque des revendications 1 à 3, dans laquelle une taille de particule moyenne des particules de silice est de 3 à 100 nm.

5.  Dispersion aqueuse pour impression à jet d'encre selon l'une quelconque des revendications 1 à 4, dans laquelle le pigment est un pigment cyan.

6.  Dispersion aqueuse pour impression à jet d'encre selon la revendication 5, dans laquelle un rapport, intensité à 630 nm / intensité à 550 nm, dans des spectres de réflexion d'une lampe d'halogène à rayons C à partir d'images imprimées est de 4 ou moins.

7.  Dispersion aqueuse pour impression à jet d'encre selon l'une quelconque des revendications 1 à 6, dans laquelle le polymère insoluble dans l'eau est un copolymère qui peut être obtenu par la copolymérisation d'un mélange de monomère comprenant au moins un monomère sélectionné à partir (a) d'un monomère contenant un groupe formant du sel, (b) d'un monomère hydrophobe et (c) d'un macromère.

8.  Encre à base d'eau pour impression à jet d'encre comprenant la dispersion aqueuse selon l'une quelconque des revendications 1 à 7.

9.  Procédé de production d'une dispersion aqueuse pour impression à jet d'encre, qui comprend :

    une étape 1 consistant à soumettre un mélange comprenant des particules de silice, dont une surface est au moins en partie hydrophobe, un pigment autre que les particules de silice, un polymère insoluble dans l'eau, un solvant organique et de l'eau à un traitement de dispersion, pour obtenir une dispersion ; et
    une étape 2 consistant à enlever le solvant organique de la dispersion obtenue dans l'étape 1.

10. Utilisation d'une dispersion aqueuse en tant qu'encre à base d'eau pour impression à jet d'encre, dans laquelle la dispersion aqueuse comprend des particules de polymère insolubles dans l'eau qui contiennent des particules de silice et un pigment autre que les particules de silice, dans laquelle une surface des particules de silice est au moins en partie hydrophobe.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003306620 A
- JP 2004067903 A
- JP 2004091590 A
- JP 9227812 A
- JP 11012516 A
- JP 7033250 B
- JP 6073389 A
- JP 6206720 A
- JP 7187647 A
- JP 9286939 A

**Non-patent literature cited in the description**

- Color Science Handbook. University of Tokyo Press, 777